(19) Europäisches Patentamt
European Patent Office
Office européen des brevets

(11) **EP 4 757 045 A1**

(12) **EUROPEAN PATENT APPLICATION**
published in accordance with Art. 153(4) EPC

(43) Date of publication:
**10.06.2026 Bulletin 2026/24**

(21) Application number: **24895752.4**

(22) Date of filing: **13.08.2024**

(51) International Patent Classification (IPC):
*H01M 50/528* (2021.01)

(52) Cooperative Patent Classification (CPC):
**H01M 50/15; H01M 50/528; H01M 50/531;
H01M 50/533;** Y02E 60/10

(86) International application number:
**PCT/CN2024/111758**

(87) International publication number:
**WO 2025/112649 (05.06.2025 Gazette 2025/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.11.2023 CN 202323266000 U**

(71) Applicants:
• **HUIZHOU EVE POWER CO., LTD**
**Huizhou, Guangdong 516039 (CN)**
• **Eve Power Co., Ltd.**
**Jingmen, Hubei 448000 (CN)**

(72) Inventors:
• **SHU, Kuanjin**
**Huizhou, Guangdong 516039 (CN)**
• **DUAN, Dong**
**Huizhou, Guangdong 516039 (CN)**
• **LIU, Ziwen**
**Huizhou, Guangdong 516039 (CN)**
• **HE, Wei**
**Huizhou, Guangdong 516039 (CN)**

(74) Representative: **Herrero & Asociados, S.L.
Edificio Aqua - Calle Agustín de Foxá, 4-10, 2ºA
28036 Madrid (ES)**

(54) **CONNECTION STRUCTURE, COVER PLATE ASSEMBLY AND BATTERY**

(57) The present disclosure provides a connection structure, a cover assembly and a battery. The connection structure includes a tab connection portion and a pole connection portion that are arranged at an angle to each other. The tab connection portion is configured to connect with a tab of the core pack. The pole connection portion is configured to connect a pole. A thickness of the tab connection portion is greater than a thickness of the pole connection portion, so that a distance from the tab welded to the tab connection portion to a side surface of the core pack is greater than the thickness of the pole connection portion. In the present disclosure, the thickness of the pole connection portion is less than that of the tab connection portion, so that the distance between the welding position of the tab connection portion and the core pack can be increased, thereby reducing the heat transfer speed. The reduced thickness of the pole connection portion can reduce the space occupied by the tab connection portion in the housing, thereby improving the space utilization rate of the battery and increasing the battery capacity.

FIG. 5

**Description**

The present disclosure claims priority to Chinese Patent Application No. 202323266000. X, filed with the State Intellectual Property Office of the P. R. China on November 30, 2023 and entitled "connection structure, cover assembly and battery", the disclosure of which is incorporated herein by reference in its entirety.

**TECHNICAL FIELD**

The present disclosure relates to the field of battery technologies, and in particular, to a connection structure, a cover assembly, and a battery.

**BACKGROUND**

A battery mainly includes a housing with an opening, a cover assembly sealing the opening, and a core pack arranged inside the housing. The side surface of the core pack is provided with a tab. The side surface of the core pack where the tab is located is arranged at an angle to the cover assembly. The cover assembly includes a top cover and a pole provided on the top cover. The pole and the tab are connected by an L-shaped connection piece. The connection piece includes a tab connection portion and a pole connection portion that are vertically arranged. The pole connection portion is arranged parallel to the top cover and is welded to the pole, while the tab connection portion is located at one side of the core pack and is welded to the tab.

**TECHNICAL PROBLEM**

However, existing connection pieces are uniformly thick. To prevent the heat generated during welding between the tab connection portion and the tab from easily transferring to the core pack and avoid core pack burns that could lead to short circuits, the tab connection portion needs to be thickened. However, the pole connection portion is also thickened, which reduces the dimensional utilization in the height direction and decreases the battery capacity.

**TECHNICAL SOLUTION**

The present disclosure provides a connection structure for connecting a core pack and a pole of a battery. The connection structure includes a tab connection portion and a pole connection portion that are arranged at an angle to each other. The tab connection portion is configured to connect with a tab of the core pack. The pole connection portion is configured to connect the pole. A thickness of the tab connection portion is greater than a thickness of the pole connection portion, so that a distance from the tab welded to the tab connection portion to a side surface of the core pack is greater than the thickness of the pole connection portion.

**BENEFICIAL EFFECTS**

In the present disclosure, the thickness of the tab connection portion is designed to be greater than that of the pole connection portion, so as to increase the thickness of the tab connection portion. Thus, the distance between the welding position of the tab connection portion and the side surface of the core pack where the tab is located is increased, and the heat transfer speed from welding to the core pack can be reduced, thereby minimizing burn-induced short circuits in the core pack. At the same time, the thickness of the pole connection portion is reduced, so that the pole connection portion is prevented from being thickened and occupying additional internal space in the housing. Therefore, this design can maximize height-direction space utilization within the battery housing while effectively minimizing heat transfer to the core pack during welding.

**BRIEF DESCRIPTION OF THE DRAWINGS**

FIG. 1 is a perspective view of a battery according to the present disclosure, excluding a housing.
FIG. 2 is an exploded assembly view of the battery according to the present disclosure, excluding the housing.
FIG. 3 is a cross-sectional view of the battery according to the present disclosure.
FIG. 4 is an enlarged view of position A in FIG. 3.
FIG. 5 is a perspective view of a connection structure according to the present invention.
FIG. 6 is a first side view of the connection structure according to the present disclosure.
FIG. 7 is an enlarged view of position B in FIG. 6.
FIG. 8 is a second side view of the connection structure according to the present disclosure.
FIG. 9 is an enlarged view of position C in FIG. 8.

In the figures:

1, tab connection portion; 11, first substrate; 12, first plate; 13, heat insulation cavity; 2, pole connection portion; 21, second substrate; 22, second plate; 23, fuse hole; 3, opening; 4, convex structure;
100, connection structure; 200, cover body; 300, pole; 400, plastic member; 401, receiving groove; 500, core pack; 501, tab; 5011, first segment; 5012, second segment; 502, insertion slot; 600, insulating sheet; 700, housing.

**DETAILED DESCRIPTION**

At present, the battery mainly uses a L-shaped connection pieces to connect to a pole and a tab to realize a charging and discharging function of the battery. The connection piece includes a tab connection portion and a pole connection portion that are vertically arranged. The pole connection portion is arranged parallel to a top cover and is welded to the pole, while the tab connection portion is located at one side of the core pack and is welded to the tab. Because the tab protruding from the side surface of the core pack occupies an internal space of the battery, the utilization rate of the internal space of the battery is reduced, and the battery capacity is reduced.

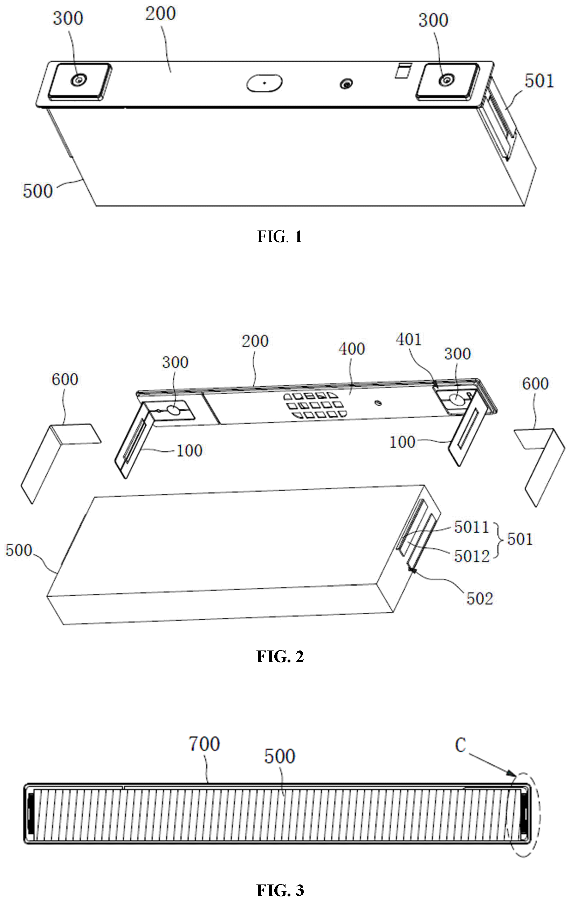

As shown in FIG. 1 to FIG. 4, a battery provided in the present disclosure includes a housing 700 having an opening, a core pack 500 arranged inside the housing 700, and a cover assembly. The cover assembly is configured to be sealed on the opening. The core pack 500 is provided with a tab 501. The cover assembly is arranged at an angle with a side surface of the core pack 500 where the tab 501 is located. The cover assembly includes a cover plate, a pole 300 and a connection structure 100. The pole 300 is mounted on the cover plate. The connection structure 100 is respectively connected to the pole 300 and the tab 501.

Specifically, the tab 501 includes a first segment 5011 and a second segment 5012 that are arranged at an angle to each other. One end of the first segment 5011 away from the second segment 5012 is connected to the core pack 500. The core pack 500, the first segment 5011 and the second segment 5012 together form an insertion slot 502. The connection structure 100 includes a tab connection portion 1 and a pole connection portion 2. The tab connection portion 1 is inserted into the insertion slot 502 and is welded to the second segment 5012, and the tab connection portion 1 is arranged insulated from the core pack 500, to avoid short circuit damage of the core pack 500. The tab 501 is bent and welded to the tab connection portion 1, which helps reduce the length of the tab 501 protruding from a connection surface of the core pack 500, thereby minimizing the space occupied by the tab 501 inside the housing 700. Additionally, after bending, the tab 501 forms the insertion slot 502 that engages with the tab connection portion 1, this allows the tab connection portion 1 to be positioned between the second segment 5012 of the tab 501 and the connection surface of the core pack 500, preventing the tab connection portion 1 from protruding outward beyond the second segment 5012 and occupying additional space inside the housing 700. As a result, this design effectively reduces the space occupied by both the tab 501 and the connected tap 501 inside the housing 700, improving the spatial utilization within the housing 700 and contributing to increased battery capacity.

In an embodiment, an insulating sheet 600 is arranged between the tab connection portion 1 and the core pack 500. The insulating sheet 600 provides insulation to isolate the tab connection portion 1 from the core pack 500, thereby preventing short circuits in the core pack 500 caused by direct contact between the tab connection portion 1 and the core pack 500.

However, since the battery employs welding between the tab 501 and the tab connection portion 1, the heat generated during welding can easily transfer to the core pack 500. Therefore, during the welding process, there exists a risk that the core pack 500 may get burned, leading to short circuits in the core pack 500. To prevent the heat generated during welding between the tab connection portion 1 and the tab 501 from easily transferring to the core pack 500, and to avoid burning the core pack 500 and causing short circuits in the core pack 500, it is necessary to increase the thickness of the tab connection portion 1. However, existing connection pieces are formed by bending a plate material, resulting in connection pieces with uniform thickness. If the tab connection portion 1 is thickened, the pole connection portion 2 will also be thickened accordingly. This leads to low utilization of the internal space of the housing 700 in a height direction, thereby reducing the battery capacity.

As shown in FIG. 1 to FIG. 5, the present disclosure provides a connection structure 100 for use in the battery of the present disclosure. The connection structure 100 includes a tab connection portion 1 and a pole connection portion 2 that are arranged at an angle to each other. The tab connection portion 1 is configured to connect with the tab 501 of the core pack 500, while the pole connection portion 2 is configured to be welded to the pole 300. The thickness of the tab connection portion 1 is greater than that of the pole connection portion 2, so that a distance from the tab 501 welded to the tab connection portion 1 to a side surface of the core pack 500 where the tab 501 is located is greater than the thickness of the pole connection portion 2. The greater the welding thickness, the slower the heat transfer during welding. Therefore, by making the thickness of the tab connection portion 1 greater than the pole connection portion 2, the increased thickness of the tab connection portion 1 helps reduce heat transfers to the core pack 500 during welding, thereby minimizing the risk of burn-induced short circuits in the core pack 500. Meanwhile, keeping the pole connection portion 2 thinner avoids increasing the internal space occupied by the pole connection portion 2 within the housing 700 due to thickening of the pole connection portion 2. Thus, this design maximizes the height-direction space utilization within the housing 700 of the battery while effectively preventing welding heat from transferring to the core pack 500.

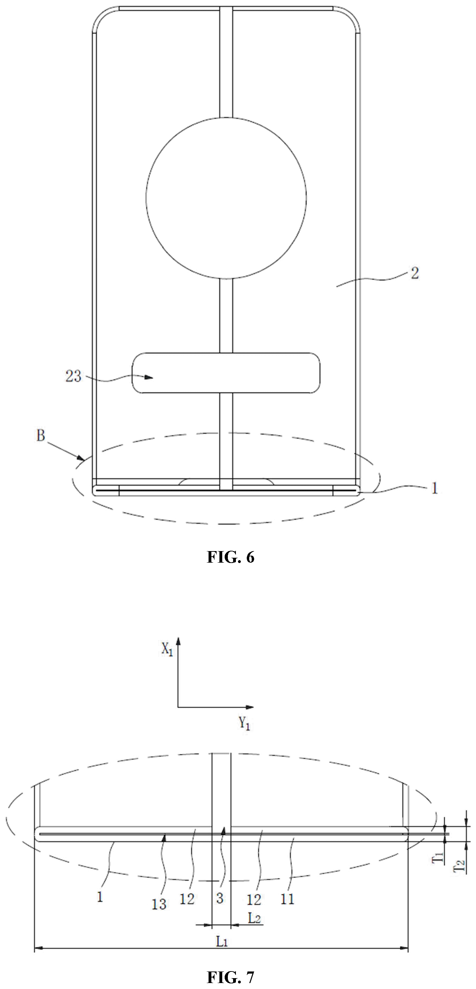

As shown in FIG. 6 and FIG. 7, the tab connection portion 1 includes a first substrate 11. Along a thickness direction (i.e., a direction X1 shown in the figures) of the tab connection portion 1, at least one side of the first substrate 11 is arranged a first plate 12 at an interval. The first substrate 11 and the first plate 12 are formed by bending a plate material, forming a heat insulation cavity 13 between the first substrate 11 and the first plate 12. One side surface of the first substrate 11 facing away from the first plate 12 or one side surface of the first plate 12 facing away from the first substrate 11 is configured to connect the tab 501 of the core pack 500. In other words, the tab connection portion 1 is formed with a folded structure by bending, so as to achieve increased thickness of the tab connection portion 1 while avoiding thickening of the pole connection portion 2. Moreover, the heat insulation cavity 13 is formed between the first substrate 11 and the first plate 12 that are spaced apart. The heat insulation cavity 13 can reduce the transfer rate of heat generated during welding between the tab connection portion 1 and the tab 501 of the core pack 500, so as to minimize the heat transfers to the core pack 500 as much as possible, thereby reducing burn-induced short circuit damage of the core pack 500 and improving the battery production yield. Meanwhile, during battery operation, the heat insulation cavity 13 allows the electrolyte inside the housing 700 to flow through, thereby improving the electrolyte filling efficiency and the wetting effect of the core pack 500, and consequently enhancing the battery performance.

It should be noted that, in this embodiment, the first substrate 11 is inserted into the insertion slot 502 of the core pack 500, and one side surface of the first substrate 11 facing away from the first plate 12 is welded with the second segment 5012 of the tab 501. Certainly, in other embodiments, without considering space utilization inside the housing 700, the tab connection portion 1 may also be arranged on one side surface of the second segment 5012 of the tab 501 facing away from the core pack 500, and one side surface of the first plate 12 facing away from the first substrate 11 is welded with one side surface of the second segment 5012 facing away from the core pack 500.

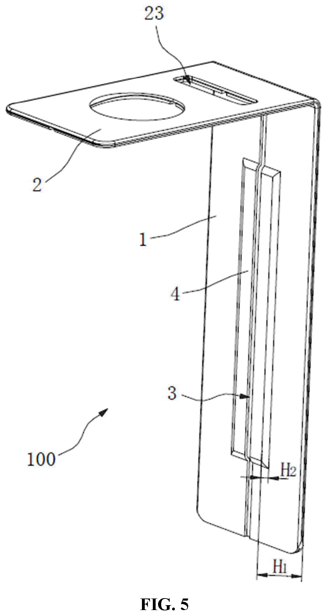

In an embodiment, as shown in FIG. 5 to FIG. 8, two ends of the first substrate 11 in its width direction (i.e., a direction Y1 in the figures) are respectively connected to two first plates 12. The two first plates 12 are located at the same side of the first substrate 11, and are arranged with an interval between them to form an opening 3 that communicates with the heat insulation cavity 13. In other words, the two ends of the tab connection portion 1 are respectively folded toward a center to form two folded portions arranged symmetrically. An interval is maintained between the two folded portions to form the opening 3, so as to prevent overlapping of the two folded portions during bending that would cause an increase in thickness of the tab connection portion 1, thereby avoiding a situation where an actual thickness of the tab connection portion 1 is inconsistent with the designed thickness and consequently the tab connection portion 1 cannot be inserted into and matched with the insertion slot 502 on the core pack 500. Moreover, during battery operation, the electrolyte can directly flow between the heat insulation cavity 13 and the core pack 500 through the opening 3, which helps shorten the flow path of the electrolyte, improving the electrolyte filling efficiency and the wetting effect of the core pack 500.

Certainly, in other embodiments, one end of the tab connection portion 1 may also be folded toward the other end along a "Z"-shaped path to form a first folded structure, which is formed with a folded portion.

In an embodiment, the heat insulation cavity 13

has a thickness $T_1$, the tab connection portion 1 has a thickness $T_2$, and the tab 501 has a thickness $T_3$, where

$$0.1 * T_3 \leq \frac{T_1}{T_2} \leq 5 * T_3$$

. An excessive thickness of the heat insulation cavity 13 would increase the space occupied by the tab connection portion 1 inside the housing 700, while an insufficient thickness of the heat insulation cavity 13 would reduce the heat insulation effect of the heat insulation cavity 13. This design determines the thickness of both the heat insulation cavity 13 and the tab connection portion 1 based on a total stacked thickness of the tab connection portion 1 and the tab 501, as well as the thickness of the tab 501, so as to minimize the spatial occupation of the tab connection portion 1 within the housing 700 while ensuring the heat insulation effect of the heat insulation cavity 13, thereby improving the utilization rate of the internal space of the housing 700.

Specifically, the side surface of the first substrate 11 facing away from the first plate 12 is welded to the tab. The first substrate 11 includes a welding region and a non-welding region. The welding region is configured to connect with the tab 501 of the core pack 500. The first plate 12 at least partially overlaps with the welding region, so as to block heat transfer during welding and reduce heat transfer speed. The opening 3 is aligned with the non-welding region, to minimize the heat transfer directly to the core pack 500 through the opening 3.

In an embodiment, the first substrate 11 has a width $L_1$, the opening 3 has a width $L_2$, where

$$\frac{L_1}{3} \geq L_2 \geq 0.1\text{mm}$$

, and $0.8\text{mm} \geq L_2 \geq 0.1\text{mm}$. In this embodiment, $L_2$ is 0.1mm, 0.2mm, 0.3mm, 0.4mm, 0.5mm, 0.6mm, 0.7mm, 0.8mm, etc. An excessive width of the opening 3 would reduce the area of the welding region, resulting in a smaller welding area between the tab connection portion 1 and the tab 501, which would affect the current-carrying capacity between the tab 501 and the tab connection portion 1. Conversely, an insufficient width of the opening 3 would impede electrolyte flow, adversely affecting the wetting effect of the core pack 500. This design ensures the welding area between the tab connection portion 1 and the tab 501 while maximizing electrolyte flow efficiency, thereby balancing the wetting effect and current-carrying capacity of the core pack 500, thereby ensuring the usage performance of the battery.

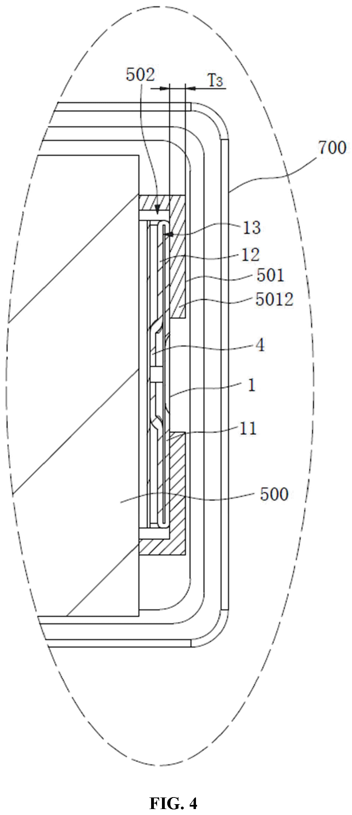

Specifically, as shown in FIGs. 4, 5 and 8, one side surface of the first plate 12 facing the core pack 500 protrudes with a convex structure 4. The convex structure 4 is aligned with the non-welding region. When the tab connection portion 1 is inserted into the insertion slot 502, the convex structure 4 can be insulated against the connection surface of the core pack 500 through the insulating sheet 600, thereby spacing the welding region apart from the core pack 500. At the same time, the side surface of the first substrate 11 facing away from the core pack 500 is attached to the second segment 5012 of the tab 501. In this way, lateral movement of the tab connection portion 1 is restricted within the insertion slot 502, so as to facilitate welding between the first substrate 11 and the tab 501, at the same time, separation between the first substrate 11 and the core pack 500 can also be maintained, so as to prevent damage to the core pack 500 during welding. Furthermore, the convex structure 4 can serve as a reinforcing structure, enhancing the structural strength of the connection of the tab 501, and reducing the risk of deformation and damage to the tab connection portion 1.

In one embodiment, the convex structure 4 is formed by stamping the tab connection portion 1.

It should be noted that in the aforementioned embodiments, the thickness of the tab connection portion 1 is greater than that of the pole connection portion 2, where a total thickness $H_2$ of the tab connection portion 1 refers to the thickness including the thickness $H_1$ of the convex structure 4.

In an embodiment, the convex structure 4 has a thickness $H_1$, and the tab connection portion has a total thickness $H_2$, where $H_2 * 5 \geq H_1 \geq 0.5mm$, and $5mm \geq H_2 \geq 0.5mm$. In the present embodiment, $H_2$ is 0.5mm, 0.6mm, 0.7mm, 0.8mm, 0.9mm, 1mm, 1.2mm, 1.5mm, 1.8mm, 2mm, 2.2mm, 2.5mm, 2.8mm, 3mm, 3.4mm, 3.5mm, 3.8mm, 4mm, 4.4mm, 4.5mm, 4.7mm, 5mm, etc. An excessive protrusion thickness of the protrusion of the convex structure 4 would increase the space occupied by the tab connection portion 1 inside the housing 700, and reduce the space utilization rate inside the housing 700. On the other hand, an insufficient thickness of the protrusion of the convex structure 4 would result in an insufficient spacing between the tab connection portion 1 and the core pack 500, causing burn damage to the core pack 500 during welding. In addition, this design ensures a sufficient heat insulation spacing between the core pack 500 and the welding region of the tab connection portion 1, while minimizing the protrusion thickness of the tab connection portion 1 as much as possible to improve the space utilization rate inside the housing 700.

In one embodiment, the pole connection portion 2 includes a second substrate 21. Along a thickness direction (i.e., a direction X2 shown in the figures) of the pole connection portion 2, at least one side of the second substrate 21 is provided with a second plate 22. The second substrate 21 and the second plate 22 are formed by bending a plate material, so as to improve the structural strength of the pole connection portion 2.

In an embodiment, the pole connection portion 2 and the tab connection portion 1 are integrally formed by bending from one plate material, so as to improve an overall structural strength of the connection structure 100. The pole connection portion 2 and the tab connection portion 1 are arranged vertically, that is, the entire plate is bent 90° once to form the pole connection portion 2 and the tab connection portion 1.

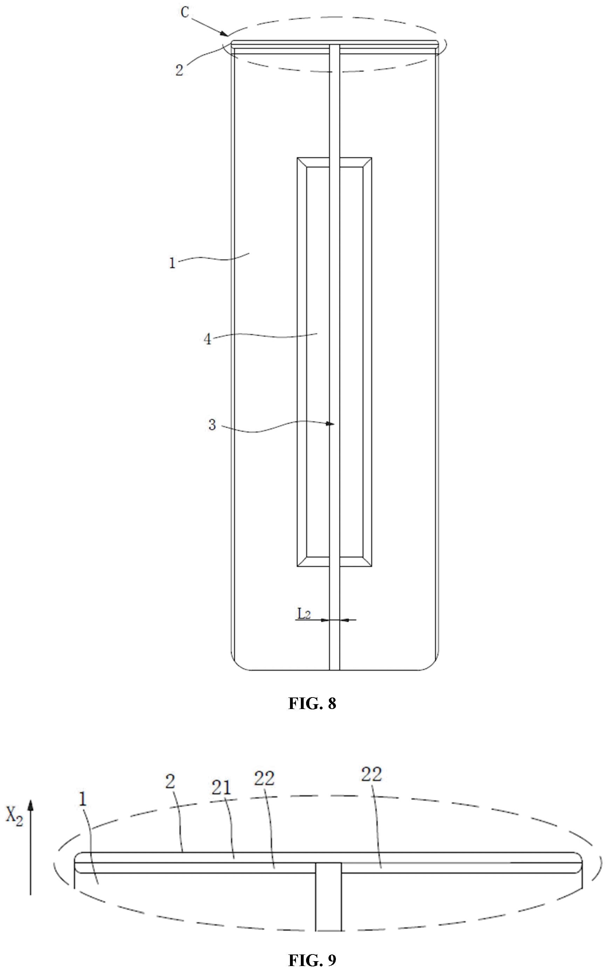

Since the pole connection portion 2 and the tab connection portion 1 are integrally formed by bending, thicknesses of the first substrate 11, the first plate 12, the second substrate 21 and the second plate 22 are substantially consistent. In an embodiment, as shown in FIG. 8 and

FIG. 9, at least one side of the first substrate 11 is provided with a plurality of first plates 12, and at least one side of the second substrate 21 is provided with a plurality of second plates 22, that is, the pole connection portion 2 is formed with a multi-layer folding structure by bending a plate material a plurality of times, and the pole connection portion 1 is formed with a multi-layer folding structure by bending the plate material a plurality of times. The number of the first plates 12 is greater than the number of the second plates 22, so that the total thickness of the tab connection portion 1 is greater than the total thickness of the pole connection portion 2.

In an embodiment, the first substrate 11 and the first plate 12 are spaced apart from each other, and adjacent first plates 12 are spaced apart from each other; the second substrate 21 and the second plate 22 are attached to each other, and adjacent second plates 22 are attached to each other, so as to achieve that the total thickness of the tab connection portion 1 is greater than the total thickness of the tab connection portion 2.

In another embodiment, the number of the first plates 12 may also be greater than the number of the second plates 22, so as to achieve that the total thickness of the tab connection portion 1 is greater than the total thickness of the pole connection portion 2.

Of course, in other embodiments, the first substrate 11 and the first plate 12 are spaced apart from each other, and adjacent first plates 12 are spaced apart from each other; the second substrate 21 and the second plate 22 are attached to each other, and adjacent second plates 22 are attached to each other; and the number of the first plates 12 is greater than or equal to the number of the second plates 22, so as to achieve that the total thickness of the tab connection portion 1 is greater than the total thickness of the tab connection portion 2.

Specifically, as shown in FIG. 5, the pole connection portion 2 is further provided with a fuse hole 23. By means of this design, a portion of the connection structure 100 provided with the fuse hole 23 has high resistance, and when thermal runaway occurs in the battery and a temperature rise of the connection structure 100 is high, the portion of the connection structure 100 provided with the fuse hole 23 can be fused first, so as to avoid high-temperature runaway of the battery, thereby enhancing the safety performance of the battery.

Referring to FIG. 2, the present disclosure further provides a cover assembly, which includes a cover body 200, a pole 300, a plastic member 400, and the connection structure 100 of any of the above embodiments. The plastic member 400 is arranged on one side surface of the cover body 200. The plastic member 400 is provided with a through hole, and the pole 300 is mounted on the cover body 200. One end of the pole 300 extends through the through hole, while the other end of the pole 300 is located at one side of the cover body 200 facing away from the plastic member 400. One side surface of the plastic member 400 facing away from the cover body 200 is further recessed to form a receiving groove 401. The through hole penetrates through a bottom of the receiving groove 401. The pole connection portion 2 of the connection structure 100 is provided within the receiving groove 401 and is connected to the pole 300. By providing the receiving groove 401, the pole connection portion 2 can be hidden in the receiving groove 401. This eliminates the need to reserve space between the core pack 500 and the plastic member 400 to accommodate the pole connection portion 2, thereby improving the space utilization inside the battery and consequently increasing the battery capacity.

**Claims**

1. A connection structure for connecting a core pack and a pole of a battery, **characterized in that** the connection structure comprises a tab connection portion and a pole connection portion that are arranged at an angle to each other; the tab connection portion is configured to connect with a tab of the core pack; the pole connection portion is configured to connect the pole; a thickness of the tab connection portion is greater than a thickness of the pole connection portion, so that a distance from the tab welded to the tab connection portion to a side surface of the core pack is greater than the thickness of the pole connection portion.

2. The connection structure according to claim 1, **characterized in that** one side surface of the tab connection portion facing the core pack protrudes with a convex structure.

3. The connection structure according to claim 2, **characterized in that** the convex structure is formed by stamping the tab connection portion.

4. The connection structure according to claim 1, **characterized in that** the tab connection portion comprises a first substrate; wherein along a thickness direction of the tab connection portion, at least one side of the first substrate is arranged with a first plate at an interval; the first substrate and the first plate are formed by bending a plate material, forming a heat insulation cavity between the first substrate and the first plate; one side surface of the first substrate facing away from the first plate or one side surface of the first plate facing away from the first substrate is configured to connect the tab of the core pack.

5. The connection structure according to claim 4, **characterized in that** one side surface of the first substrate facing away from the core pack is attached to the second segment of the tab.

6. The connection structure according to claim 4, **characterized in that** two ends of the first substrate in a width direction are respectively connected to two first plates, the two first plates are located at a same side of the first substrate, and are arranged with an interval between them to form an opening that communicates with the heat insulation cavity.

7. The connection structure according to claim 6, **characterized in that** the side surface of the first substrate facing away from the first plate comprises a welding region and a non-welding region; the welding region is configured to connect with the tab, the first plate at least partially overlaps with the welding region, and the opening is aligned with the non-welding region.

8. The connection structure according to claim 4, **characterized in that** the side surface of the first substrate facing away from the first plate comprises a welding region and a non-welding region; the welding region is configured to connect with the tab; one side surface of the first plate facing the core pack protrudes with a convex structure; wherein the convex structure is aligned with the non-welding region; the convex structure is configured to be insulated against a side surface of the core pack, so as to space the welding region from the core pack.

9. The connection structure according to claim 8, **characterized in that** the convex structure is insulated against a connection surface of the core pack through an insulating sheet.

10. The connection structure according to claim 6, **characterized in that** the first substrate has a width $L_1$, the opening has a width $L_2$, wherein

$$\frac{L_1}{3} \geq L_2 \geq 0.1 \text{mm} \quad ;$$

and/or, the heat insulation cavity has a thickness $T_1$, the tab connection portion has a thickness $T_2$, and the tab has a thickness $T_3$, wherein

$$0.1 * T_3 \leq \frac{T_1}{T_2} \leq 5 * T_3 ;$$

and/or, one side surface of the tab connection portion facing the core pack protrudes with a convex structure; wherein the convex structure has a thickness $H_1$, and the tab connection portion has a total thickness $H_2$, wherein $H_2 * 5 \geq H_1 \geq 0.5 \text{mm}$.

**11.** The connection structure according to claim 4, **characterized in that** the pole connection portion comprises a second substrate; wherein along a thickness direction of the pole connection portion, at least one side of the second substrate is provided with a second plate; wherein the second substrate and the second plate are formed by bending the plate material.

**12.** The connection structure according to claim 11, **characterized in that** the second substrate and the second plate are attached to each other;
and/or, at least one side of the first substrate is provided with a plurality of the first plates, at least one side of the second substrate is provided with a plurality of the second plates, and the number of the first plates is greater than or equal to the number of the second plates.

**13.** The connection structure according to any one of claims 1 to 12, **characterized in that** the pole connection portion is further provided with a fuse hole.

**14.** The connection structure according to any one of claims 1 to 12, **characterized in that** the pole connection portion and the tab connection portion are integrally formed by bending from one plate material.

**15.** A cover assembly, comprising the connection structure according to any one of claims 1 to 14.

**16.** The cover assembly according to claim 15, **characterized by** further comprising a cover body, a pole and a plastic member; wherein the plastic member is arranged on one side surface of the cover body; the plastic member is provided with a through hole; the pole is mounted on the cover body, and one end of the pole extends through the through hole; one side surface of the plastic member facing away from the cover body is further recessed to form a receiving groove; the through hole penetrates through a bottom of the receiving groove; the pole connection portion of the connection structure is provided within the receiving groove and is connected to the pole.

**17.** A battery, comprising a housing having an opening and a core pack arranged inside the housing, wherein the core pack is provided with a tab; **characterized in that** the battery further comprises the cover assembly as claimed in claim 15 or 16; wherein the cover assembly is sealed on the opening; the tab connection portion of the connection structure of the cover assembly is connected to the tab.

**18.** The battery according to claim 17, **characterized in that** the tab comprises a first segment and a second segment that are arranged at an angle to each other; wherein one end of the first segment away from the second segment is connected to the core pack; the core pack, the first segment and the second segment together form an insertion slot; the tab connection portion is inserted into the insertion slot; a first substrate of the tab connection portion is welded to the second segment, and a first plate of the tab connection portion is arranged insulated from the core pack.

FIG. 1

FIG. 2

FIG. 3

**FIG. 4**

**FIG. 5**

**FIG. 6**

**FIG. 7**

**FIG. 8**

**FIG. 9**

## INTERNATIONAL SEARCH REPORT

| International application No. |
|---|
| **PCT/CN2024/111758** |

| A. | CLASSIFICATION OF SUBJECT MATTER |
|---|---|
| | H01M 50/528(2021.01)i |

According to International Patent Classification (IPC) or to both national classification and IPC

| B. | FIELDS SEARCHED |
|---|---|

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS, CJFD, CNTXT, ENTXT, ENTXTC, DWPI, ISI Web of Science, 中国期刊网全文数据库, CJFD, 读秀, DUXIU: 亿纬, 亿纬动力, 舒宽金, 段栋, 刘子文, 何巍, 极耳, 引脚, 导电带, 横部, 竖部, 连接部, 极柱, 厚度, 距离, 电芯, 芯包, 焊接部, 凸起, 凸包, 基板, 焊接, 塑胶件, 绝缘, 通孔, thickness, connect+, Battery, electric core, lithium ion, pole, ear, top cover, tab core

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 211719696 U (EVE POWER CO., LTD.) 20 October 2020 (2020-10-20) description, paragraphs 0035-0056, and figures 1-6 | 1 |
| Y | CN 211719696 U (EVE POWER CO., LTD.) 20 October 2020 (2020-10-20) description, paragraphs 0035-0056, and figures 1-6 | 2-3, 13-15, 17 |
| Y | CN 219106333 U (EVE POWER CO., LTD.) 30 May 2023 (2023-05-30) description, paragraphs 0036-0074, and figures 1-10 | 2-3, 13-15, 17 |
| A | CN 218975733 U (SUNWODA ELECTRIC VEHICLE BATTERY CO., LTD.) 05 May 2023 (2023-05-05) entire document | 1-18 |
| A | CN 219286531 U (EVE POWER CO., LTD.) 30 June 2023 (2023-06-30) entire document | 1-18 |
| A | CN 116031580 A (EVE POWER CO., LTD.) 28 April 2023 (2023-04-28) entire document | 1-18 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 September 2024** | **16 October 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2024/111758** |

**C.    DOCUMENTS CONSIDERED TO BE RELEVANT**

| Category* | Citation of document, with indication, where appropriate, of the relevant passages | Relevant to claim No. |
|---|---|---|
| A | CN 116231233 A (EVE POWER CO., LTD.) 06 June 2023 (2023-06-06)<br>entire document | 1-18 |
| A | CN 116845499 A (BEIJING CHJ AUTOMOTIVE TECHNOLOGY CO., LTD.) 03 October 2023 (2023-10-03)<br>entire document | 1-18 |
| A | CN 218448371 U (TRINA ENERGY STORAGE SOLUTIONS (JIANGSU) CO., LTD.) 03 February 2023 (2023-02-03)<br>entire document | 1-18 |
| A | WO 2023035990 A1 (SUNWODA ELECTRIC VEHICLE BATTERY CO., LTD.) 16 March 2023 (2023-03-16)<br>entire document | 1-18 |

Form PCT/ISA/210 (second sheet) (July 2022)

## INTERNATIONAL SEARCH REPORT
### Information on patent family members

| International application No. |
|---|
| **PCT/CN2024/111758** |

| Patent document cited in search report | | | Publication date (day/month/year) | Patent family member(s) | | | Publication date (day/month/year) |
|---|---|---|---|---|---|---|---|
| CN | 211719696 | U | 20 October 2020 | None | | | |
| CN | 219106333 | U | 30 May 2023 | None | | | |
| CN | 218975733 | U | 05 May 2023 | None | | | |
| CN | 219286531 | U | 30 June 2023 | None | | | |
| CN | 116031580 | A | 28 April 2023 | None | | | |
| CN | 116231233 | A | 06 June 2023 | CN | 219873933 | U | 20 October 2023 |
| CN | 116845499 | A | 03 October 2023 | None | | | |
| CN | 218448371 | U | 03 February 2023 | None | | | |
| WO | 2023035990 | A1 | 16 March 2023 | CN | 113764799 | A | 07 December 2021 |
| | | | | CN | 216213802 | U | 05 April 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202323266000X